(19) Europäisches Patentamt
European Patent Office
Office européen des brevets

(11) Publication number: 0 129 394 B1

(12) **EUROPEAN PATENT SPECIFICATION**

(45) Date of publication of patent specification: 29.11.89

(51) Int. Cl.[4]: C 09 D 3/81, C 09 D 3/58, C 08 L 63/00 // (C08L63/00, 33:06, 101:02)

(21) Application number: 84303957.9

(22) Date of filing: 12.06.84

(54) **Coating composition.**

(30) Priority: 17.06.83 GB 8316601

(43) Date of publication of application: 27.12.84 Bulletin 84/52

(45) Publication of the grant of the patent: 29.11.89 Bulletin 89/48

(84) Designated Contracting States: AT BE CH DE FR GB IT LI LU NL SE

(56) References cited:
US-A-3 318 973
US-A-4 029 621
US-A-4 260 720

PATENTS ABSTRACTS OF JAPAN, vol. 4, no. 159(C-30)(641), 6th November 1980, page 2C30; & JP - A - 55 102 624 (MITSUSBISHI YUKA) 06-08-1980

PATENTS ABSTRACTS OF JAPAN, vol. 6, no. 40(C-94)(918), 12th March 1982; & JP - A - 56 157 460 (SHIN NIPPON SEITETSU K.K.) 04-12-1981

(73) Proprietor: Sequa plc
147 London Road
Kingston upon Thames Surrey KT2 6NG (GB)

(72) Inventor: Smith, Derek Hedley
133, Hillcrest Road
Camberley Surrey (GB)
Inventor: Taylor, John Roberts
51A Porth-Castell
Barry South Glamorgan Wales (GB)

(74) Representative: Ablewhite, Alan James et al
MARKS & CLERK 57/60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 129 394 B1

Courier Press, Leamington Spa, England.

## Description

The present invention relates to a coating composition. In particular the present invention relates to an organic solvent based coating composition, though comparatively minor modification of the resins' chemical structure would facilitate the formulation of water reducible coatings. The composition is capable of being cured at ambient temperatures and above to form a coating for a substrate of metal, wood or plastic and having good adhesion and a balanced combination of desired properties. In particular, properties such as gloss, hardness, adhesion, impact resistance, gloss retention and general durability, as well as resistance to such agents as atmospheric acids, petrol and grease.

Introduction—definition of terms

1. Acrylic resin

This term is used to describe a polymer which is usually made by co-reacting α,β ethylenically unsaturated compounds of which a significant proportion are the esters of α,β ethylenically unsaturated carboxylic acids.

Examples of suitable monomers are alkyl acrylates such as ethyl acrylate, butyl acrylate and 2-ethylhexyl acrylate; and alkyl methacrylates, such as methyl methacrylate, ethyl methacrylate and butyl methacrylate. Other suitable monomers can include other reactive groups such as epoxide, amino etc., for example glycidyl esters such as glycidyl methacrylate. Other suitable monomers include vinyl aromatic compounds such as styrene (or vinyl toluene) and vinyl derivatives, such as vinyl acetate or vinyl propionate. It is in addition possible to modify properties of the resin by the use of monomers such as acrylonitrile and/or methacrylonitrile.

2. Acrylic adduct

This term is used to describe a resin which is made by reacting an acrylic resin with a further component which may or may not of itself constitute a polymer.

3. Alkyd resin, polyester resin, oil modified polyester resin

These terms are used to describe polymers made by the esterification of one or more polyhydric alcohols with one or more polyfunctional carboxylic acids. A proportion of one or more monobasic acids and/or (in rare cases) monohydric alcohols may also be included. Examples of suitable polyhydric alcohols are ethylene glycol, trimethylol propane, neopentyl glycol, propylene glycol.

Examples of polyfunctional carboxylic acids are phthalic anhydride, isophthalic acid, terephthalic acid, succinic acid, adipic acid, trimellitic anhydride.

Examples of suitable monofunctional carboxylic acids are benzoic acid, *p* tert butyl benzoic acid, lauric acid and one of the tertiary carboxylic acids. (An example of the latter material is marketed by the Shell Company under the name Versatic Acid. Versatic is a registered trade mark).

An alternative to using the acid itself is to use a derivative such as the glycidyl ester. This is also marketed by the Shell Company under the name Cardura E. (Cardura is a registered trade mark).

It has been widely recognised that there is a need for coating compositions which are either non-polluting or, failing this, pollute the atmosphere to a minimal degree, but at the same time offer effective economy in the use of energy. In order to do this, such coatings need to dry at ambient temperatures and/or cure quickly at comparatively low stoving schedules. Such compositions would be particularly desirable in the refinish market (motorcar repair paint), although they would have application in other fields, for example:— motorcar finishes, wood finishes and general purpose industrial and marine finishes.

Considerable effort has been directed towards two component finishes where the two components react chemically after application to give durable paint films. A particularly suitable combination is one in which one of the components is a hydroxyl-bearing resin and the second component is a polymer containing isocyanate groupings. Paints made from these chemicals offer excellent performance but suffer from the toxicological disadvantage that the isocyanate component contains a proportion of the isocyanate monomer. Further, the proportion of free monomer can increase during storage of the prepolymer because of its partial decomposition.

More recently work has been directed towards two component finishes in which one component is a resin containing amine (or amide) groupings which is reacted with a second component containing epoxide groupings. These latter compositions have been the subject of Patents, for example US Patent 4,294,939 issued first October 13, 1981 to Eiji Taniguchi et al and assigned to Toray Industries, Tokyo, Japan.

Whilst products of this type meet many of the basic requirements enumerated above, there are practical difficulties in achieving fully satisfactory results. For example, it is widely known and accepted that for the highly durable finishes required for motorcars, the preferred major constituent is an acrylic resin. There are practical and commercial difficulties in obtaining acrylic resins containing primary or secondary amino groups. As a result, the resins used in epoxy/amine compositions tend to be based on tertiary amino groups which react more slowly, the chemical reaction proceeding, it is believed, *via* quaternary

ammonium groupings. Coatings of this type are water sensitive, at least during the early stages of the curing reaction, and can often remain so.

To produce commercially practical finishes, therefore, it is necessary to minimise the number of tertiary amine groups which results in the coating being relatively low in degree of chemical cross-linking.

Finishes based on these resin combinations, therefore, tend at least when dried at ambient temperatures, to be very sensitive to humid or wet conditions for a period of up to several days and have relatively poor hardness/flexibility properties even when fully dried.

More recently work has been carried out in the paint resin industry to modify the amino bearing acrylic resin so as to include a proportion of carboxyl groups. This latter group is also known to react with the epoxy compound at ambient temperatures but without generating water sensitivity. The disadvantage of this reaction lies in its slowness at ambient temperatures. The result is that finishes do not achieve their optimum properties for several days at least.

Thus there is a real need to accelerate the chemical reaction which takes place between the epoxide component and the amino/carboxylic acid component after the finish has been applied. This can be achieved by the addition of a mercapto compound, such as ethyl mercaptan. This technique is used in analytical methods to convert primary amines, which are difficult to separate by chromatographic methods, into amide derivatives which can be efficiently separated by chromatography.

It is also well established that mercapto compounds themselves can react with epoxide bearing materials. It is normally necessary that small proportions of amino compounds are present for this reaction to take place. The speed of reaction between the mercaptan with the epoxide is very much faster at comparatively low temperatures than that involving amino groups. Some well-known chemical adhesives make use this chemistry.

However, mercaptans themselves present problems when the aim is to produce sprayable coating compositions which are curable under ambient conditions and which are not sensitive to humidity. Simple monomeric mercaptans such as the alkyl mercaptans an mercaptoacetic acid are toxic and very unpleasant smelling. Higher molecular weight mercaptans are available which are for less toxic and relatively odourless, but many of these are incompatible with the resin system required. Thus, for example, α,ω-dimercaptolimonene, 1,6 - dimercaptohexane and alkyleneoxide derivatives of 1 - mercapto-propane - 2,3 - diol (e.g. capcure 3—800®) either do not react sufficiently with the resin system or else are undesirably water-sensitive.

We find that the problem can be solved by using thiol-containing resins, but even then it is necessary to specify certain types. For example resins produced by condensing with capcure 3—800® are water-sensitive. We have now found that the incorporation into coating compositions of certain thiol-containing resins can provide fast air drying chemically reacted finishes which utilise the chemical reaction between an epoxide adduct as one component and a mixture of resins as the second component. This mixture of resins is tailored so that some portions contain amino or amide groups, with or without, carboxylic acid groups and some contain the thiol groups, again with or without carboxylic acid groups.

According to the present invention we provide a three-component coating composition comprising a first component including a polymer containing epoxide groupings, a second component including one or more acrylic resins containing amino or amide groupings and, optionally, carboxylic acid groups, and a third component including one or more polymers containing thiol groupings and, optionally, carboxylic acid groupings selected from acrylic resins, acrylic adducts alkyd resins, oil-free alkyd resins and polyester resins, in which the thiol groupings are those obtained by reacting a hydroxy grouping with mercaptoacetic acid, and from acrylic resins and acrylic adducts, in which the thiol groupings are those obtained by reacting an epoxy grouping with a polyfunctional mercaptan.

All three components must be mixed together prior to application of the composition to a substrate. The three components can be stored separately, or, preferably, components 2 and 3 may be combined as one component.

The basic composition, therefore, generally consists of:—

Component 1

A polymer containing epoxide groupings. The composition of such that it offered good compatibility with component 2. Its structure is preferably either a mainly aliphatic di-epoxide or an acrylic polymer containing epoxide groupings. The remaining constituents are largely of a solvent nature, effectively to balance the application properties of the total finish.

Component 2

One or more acrylic resins containing amine or amide groupings. An acrylic resin must be formulated to have the correct balance of properties in terms of hardness, durability, gloss etc and contain amine and/or amide groupings. Amine groupings can be primary, secondary or tertiary, though for practical considerations the latter are normally used. This item, whether a polymer or a conventional compound may additionally contain carboxylic acid groupings.

Component 3

One or more substances containing thiol (mercaptan) groupings as defined above. Three types are suitable:.

i) An acrylic resin having the correct balance of properties and containing thiol groups.

ii) An alkyd, oil free alkyd, or polyester resin containing thiol groups.

iii) An acrylic adduct containing thiol groups.

In addition to resins, paint contains pigments to provide colour and obliteration and a wide range of additives to promote flow, resistance to settling etc, together with a mixture of solvents to balance the application properties of the coating. In this product it is usually convenient to add solvents to both component 1 and components 2 and 3. The pigments and other additives, however, normally form part of either component 1 or components 2 and 3, though, exceptionally, it might also be advantageous to have such additions to component 1 as well as to components 2 and 3.

For good results, the proportions of Components 1 and 2 must be balanced to ensure that:—

i) the ratio of the total number of epoxide equivalents to the total number of amine, amide, carboxylic acid and thiol equivalents when added together is not greater than 10:1 and not less than 0.1:1, i.e. a range of (0.1 to 10):1;

ii) the proportion of resin(s) containing thiol groups as a weight/weight percentage of all the resins containing groups which react with epoxide groups (i.e. amine, amide, carboxylic acid and thiol groups) is not less than 2% or more than 99.5%.

The invention thus consists essentially of a paint composition in which the applied film undergoes a chemical reaction between three components which most commonly would be of a polymeric nature.

1) Epoxy component

The epoxy component cannot consist of virtually any poly-epoxy functional chemical or polymer. In practice, the requirements of the ultimate paint finish preclude the use of the commonly available bisphenol A/epichlorhydrin resins widely marketed by a number of chemical companies.

The normal requirements are:

i) Compatibility with the other resin components to ensure maximum initial gloss of the paint films.

ii) Good chemical reactivity with the remaining resin components.

iii) A composition which promotes gloss retention where needed. (Bisphenol A/epichlorhydrin resins frequently show loss of gloss due to the film deterioration known as chalking when exposed to outdoor weathering).

iv) A composition which promotes maximum colour stability. Aromatic components are frequently more prone to yellowing on exposure than either aliphatic or acrylic types.

As a result, therefore, a composition for a finishing coat will be either:—

a) An essentially aliphatic compound containing at least two epoxide groupings per molecule. Polymeric materials of this type should be formulated to contain at least an average of two epoxide groupings per molecule, or

b) An acrylic resin containing an average of not substantially less than two epoxide groupings per molecule.

The acrylic resin must be formulated to have a reasonable balance of properties, such as hardness, flexibility, gloss retention etc, at least when combined with the other components such as plasticisers which may be either polymeric or solvent in type and may contain reactive groupings. A suitable method of introducing epoxide groupings into the acrylic resin would utilise glycidyl methacrylate as one of the monomers.

An example of the type of resin is shown as Example 1, though preferred materials have been provided commercially.

2. Amine/amide component

As in the case of the epoxy component, a very wide range of chemicals do not satisfy the requirements for this component. When the amine component is present in compositions according to the invention, it is essential that it is of a polymeric nature capable of providing the basic film properties previously described.

For a composition in which the paint film is produced by reaction between the amine and epoxy components, amine-containing resin of comparatively low functionality is most suitable, and for maximum durability an acrylic resin is needed as defined in the introduction, except that at least one of the monomers must contain an amino or amide group and optionally one or more monomers may contain a carboxylic acid group.

Examples of suitable amine containing monomers are dimethylaminoethyl methacrylate, and t - butylaminoethyl methacrylate.

Examples of suitable amide containing monomers are acrylamide or methacrylamide.

Examples of suitable carboxylic acid containing monomers are methacrylic acid, acrylic acid and itaconic acid.

When the amino component is carried in an acrylic resin which constitutes a major proportion of the total composition, that resin must be formulated to have a satisfactory balance of properties at least when it has been blended and reacted with the other parts of the composition in terms of gloss, hardness, adhesion, impact resistance, gloss retention and general durability, as well as resistance to such agents at atmospheric acids, petrol and grease.

A composition is generally preferred in which both the mercaptan and amino bearing components contribute to the overall properties. As the amine bearing component is an acrylic resin the level of amine bearing monomer is limited only by the properties of the final composition. Too high an amine value results in films which are water sensitive and/or exhibit blistering and/or loss of gloss, and/or colour change in humid conditions. Thus the preferred amine values depend on the proportion of the component in the overall composition.

Example 2 illustrates a resin suitable to be used primarily as a catalyst, whilst example 3 illustrates a resin suitable to be used as a major component. In the latter case preferred examples have been obtained commercially. For this type of amine component, preferred amine values lie between 5 and 30 measured as milligrams KOH per gramme of resin and preferred acid values between 10 and 50.

3. Thiol-containing reactant

3.1 Alkyd, oil-free alkyd or polyester resin containing thiol groupings

There are a wide range of compositions falling under the general heading above which would be suitable as a start material for this component. They are all essentially polymers as defined in the introduction.

It is possible to introduce the thiol groups *via* a number of chemical reactions. Commercially, the most attractive means, however, is by formulating the above resin to have a suitable excess of hydroxyl groupings over carboxylic acid groupings and then either concurrently, or preferably consecutively, reacting a proportion of the excess hydroxyls with mercaptoacetic acid. Using this preferred method approximately 70% of the theoretical level of thiol is achieved.

The formulation of alkyd/oil free alkyd/polyester resins is widely known and this invention does not depend on specific compositions of this base resin. In principle, any resin within this general type which permits the introduction of thiol groups is potentially suitable.

In practice, the requirements of the total paint film are most conveniently met if:—

i) the proportion of polyunsaturated monobasic acids is relatively low, thus facilitating compatibility within the system and minimizing discoloration on exposure to outdoor conditions.

ii) the balance of monofunctional, difunctional and polyfunctional constituents is such as to obtain a convenient viscosity/solids relationship without the need

(a) for a large excess of hydroxyl equivalent over carboxyl equivalents (or *vice versa*).

(b) to terminate the manufacture at a point where the acid value (measured in milligrams KOH per gram of resin (non-volatile)) is in excess of 50. Preferably the acid value should be below 20.

iii) there must be suitable groups to facilitate the introduction of thiol groups. If the preferred route *via* mercaptoacetic acid is to be used the unreacted hydroxyl groups must be sufficient to stoichiometrically satisfy the reaction:—

$$R—OH+HOOCCH_2SH \rightarrow R—OCOCH_2SH+H_2O$$

where R is used as an abbreviation for the resin.

The thiol functionality of the resin (measured in gram molecules per kilo of resin) can be varied over a wide range and is determined by:—

a) the properties of the final paint film.

b) the stability of the resin and/or paint.

c) the acceptability of the aroma of the composition.

Preferred functionality lies between 0.15 moles/kg and 1.5 moles SH/Kg.

Examples of suitable resins are described in Examples 4 and 5.

3.2 Acrylic resin

An alternative to the type of resin described under 3.1 is an acrylic resin formulated inherently to have the properties required of the resin described in component 2, but in which at least one of the monomers is capable of subsequent reaction to facilitate the introduction of thiol groupings.

(The alternative process of utilizing an α,β ethylenically unsaturated compound containing a mercapto grouping as a monomer during the production of resin is in practice difficult to achieve. This is because the mercapto group acts as a chain terminator and prevents the reaction producing a resin having the preferred characteristics).

Examples of suitable reactive monomers are glycidyl methacrylate or hydroxyl-bearing monomers such as 2-hydroxyl ethyl methacrylate, 2 - hydroxylethyl acrylate, and 2-hydroxy propylmethacrylate, 2 hydroxypropyl acrylate and commercially available mixtures of the above. Derivatives of these monomers may also be used such as the ethylene oxide adduct of propylene glycol monomethacrylate sold by BP Chemicals under the name Bisomer PPM6.

The manufacturing process is in two stages. The first is a conventional free radical polymerisation to produce an acrylic resin. The second stage consists of introducing the thiol groupings:—

a) If the acrylic resin contains epoxide groupings, these can be reacted with polyfunctional mercaptan or mixture of polyfunctional mercaptans (for example ethylene di mercaptan).

This reaction can frequently be accelerated by the addition of a suitable catalyst. Inorganic and organic

metallic compounds and amino compounds are among the wide range of materials which can have a catalytic effect on this reaction.

b) If the acrylic resin contains hydroxyl groupings these can be esterified by mercapto acetic acid very similarly to the route described for alkyd resins under section 3.1.

The preferred functionality lies between 0.15 and 4.0 moles SH/kg.

Suitable acrylic resins are described under Examples 6 and 7.

3.3 Acrylic adduct

If a preparation similar to that described under 3.2 (a) is carried out using a high proportion of a polyfunctional mercaptan it can be sufficient to change the physical properties of the acrylic resin. Within this specification such resins have been defined as acrylic adducts. Examples of suitable higher molecular weight polyfunctional mercaptans are the triester of trimethylol propane and mercaptoacetic acid, the tetra ester of pentaerythritol and mercapto acetic acid as well as a range of commercially available materials.

The preferred functionality has between 0.15 and 5.0 moles SH/kg.

The preparation of a suitable acrylic adduct is described under Example 8.

The manufacture of the coating composition from the above resins preferably follows a conventional pattern viz:—

"Activator Thinner" or Clear Lacquer.

Manufacture is achieved by simple blending under a stirrer. (See Examples 9 and 10).

Pigmented paint.

Manufacture follows the conventional techniques and is in two or three stages depending on the dispersion equipment chosen.

Stage 1—Premix (omitted if dispersion is by means of ball mill).

All constituents are mixed for the dispersion stage under a high speed stirrer.

Stage 2—Dispersion phase.

The product from Stage 1 is passed through a sand grinder of horizontal bead mill. Alternatively, the dispersion phase is charged to a ball mill and run until required fineness is achieved. The dispersion means are dependent on pigment type, availability etc. and not on the nature of the resin composition.

Stage 3—The remaining constituents are added whilst stirring.

Examples of paint manufacture are described under Examples 11, 12 and 13.

In the following examples, the marks Cardira, Bisomer, Pentoxone and DMP 30 are Trade Marks which may be registered in any of the designated states.

Example 1

Epoxy resin component

| | g | |
|---|---|---|
| Methyl ethyl ketone | 400 | |
| Toluene | 400 | A |
| Methyl methacrylate | 533 | |
| Butyl methacrylate | 106 | |
| Ethyl acrylate | 62 | B |
| Glycidyl methacrylate | 399 | |
| Benzoyl peroxide | 48 | |
| Butyl acetate | 50 | |
| Benzoyl peroxide | 12 | C |
| Butyl acetate | 50 | |
| Benzoyl peroxide | 18 | D |
| Butyl acetate | 151 | E |

Method

Charge 'A' to a 5 litre flask fitted with a stirrer, thermometer, Liebig condenser, dropping funnel and with contents protected by a nitrogen purge. Premix 'B' and charge to dropping funnel.

Switch on heating and raise temperature until there is a steady reflux (ca 95°C). Commence addition of 'B'. Adjust dropping funnel to affect addition at an even rate over 4 hours. Check viscosity (0.6—0.7 Pa · s) and continue reflux until there is no further viscosity increase (1.0 to 1.2 Pa · s). Premix 'C' and charge to dropping funnel. Add over 1/2 hour and check viscosity when addition complete. Run (approx 2 hours) until there is no further increase in viscosity (1.5—2.0 Pa · s). Repeat this process for components 'D'.

Cool, check non-volatile content and adjust with 'E' to ca. 50%.
Pass through filter.
Final constants:—
viscosity at 25°C ca. 1.0 Pa · s
non volatiles 50.3%
Epoxide Equivalent 370 g (calc on non-volatiles NV).

Example 2

| | | |
|---|---|---|
| Toluene | 435 | |
| Methyl ethyl ketone | 435 | A |
| Methyl methacrylate | 738 | |
| Butyl acrylate | 345 | |
| 2-ethylhexyl acrylate | 72 | B |
| Dimethylaminoethyl acrylate | 157 | |
| Benzoyl peroxide | 66 | |
| Toluene | 50 | |
| Benzoyl peroxide | 22 | C |
| Toluene | 50 | |
| Benzoyl peroxide | 30 | D |
| Toluene (To NV) | 240 | E |

Method
The method is identical to that of Example 1.
Final Constants
Viscosity (at 25°C) 0.85 Pa · s
NV 49.3%
Amine Value (mg KOH on NV) 40.4
Equivalent Wt (Calculated on NV) 1390

Example 3
Amino-containing resin component

| | g | |
|---|---|---|
| Xylene | 370 | |
| Butyl acetate | 400 | |
| Butyl methacrylate | 197.5 | A |
| Ethyl acrylate | 181 | |
| Methyl methacrylate | 650 | |
| *t*-Butylaminoethyl methacrylate | 76 | |
| Methacrylic acid | 49.5 | |
| Benzoyl peroxide | 35 | B |
| Butyl acetate | 50 | |
| Benzoyl peroxide | 7 | C |
| Butyl acetate | 50 | |
| Benzoyl peroxide | 10 | D |
| Butyl acetate | 95 | |
| Xylene | 165 | E |

Method:
Except that the reflux temperature is ca. 125°C, the method is identical to Example 1.
Final Constants:
Viscosity at 25°C 1.85 Pa · s
Non-volatiles 49.8%
Amine value 29 mg KOH/g of resin. (calc. on non-volatiles)
Acid value 26.4 mg KOH/g of resin.
Equivalent (in reaction with epoxide groups) 1170 g (calc.).

Example 4
Thiol-containing alkyd resin component

| | g | |
|---|---|---|
| Glycerine | 62 | |
| Cardira E | 460 | |
| Pentaerythritol | 22 | Stage I |
| Phthalic anhydride | 278 | |
| Adipic acid | 100 | |
| Mercaptoacetic acid | 35 | |
| Xylene | 400 | Stage II |

Method

Charge all stage I reactants in a 2 litre flask fitted with Dean & Starke water removal equipment, thermometer and stirrer. The reactants are protected by a nitrogen purge throughput the process.

Add approximately 2% xylene as an entraining solvent and heat to 232±2° over 5 hours removing the water continuously. The temperature is held and reflux maintained by adding xylene as required. Acid value is measured at intervals and when it reaches 14±1 the heat is removed and the contents cooled to 60°C. The mercaptoacetic acid is added slowly and the mixture reheated to 200°C and reflux established. When the acid value reaches 12±1 (6—7 hrs) the product is cooled to 160°C and thinned with xylene to 70% NV.

Stage I water of esterification 20 ml
Stage II water of esterification 8.2 ml
Final constants:—
Viscosity 2.35 Pa · s at 25°C
Non Volatiles 70.3% in xylene
Acid Value 13.5 (100% NV)
Colour 1.75 (PRS)

Example 5
Thiol-containing alkyd resin component

| | g | |
|---|---|---|
| Xylene | 90 | |
| Neopentyl glycol | 813 | Stage I |
| Trimethylol propane | 543 | |
| Phthalic anhydride | 1647 | |
| Mercaptoacetic acid | 224 | |
| Para toluene sulphonic acid | 5 | Stage II |
| Xylene | 1180 | |
| Calcium carbonate | 8 | Stage III |

Method

Charge stage I ingredients in a 5 litre flask equipped as in Example 5. Switch on the nitrogen purge and heat to 180°C over a 4 hour period. Hold at 180°C to reflux for one hour removing water (85 ml) and adding xylene as required to maintain reflux. Heat to 200°C and hold at this temperature until the acid value falls to 19. Water of esterification 195 g is removed over a period of 5-1/2 hours. Cool 60°C and add stage II ingredients. Reheat to 200°C and hold until the acid value falls to 24±1; of water of esterification ca. 49 g is removed. Cool to 150°C. Thin to 70±1% non-volatiles with xylene. Add Stage III magnesium oxide, stir thoroughly and hold for 30 minutes at 100°C before cooling and filtering.

Final constants:—
Viscosity 2.2 Pa · s at 25°C
Non volatiles 70.3%
Acid value 23.5 (@ 100% NV)
Colour 3/8 (PRS).

Example 6
Thiol-containing acrylic resin component

| | g | |
|---|---|---|
| Toluene | 542 | A |
| Methyl ethyl ketone | 300 | |
| Methyl methacrylate | 684 | B |
| Bisomer PPM 6 | 176 | |
| Methacrylic acid | 18 | |
| 2-Hydroxyethyl methacrylate | 161 | |
| Benzoyl peroxide | 31 | |
| Butyl acetate | 50 | C |
| Benzoyl peroxide | 7 | |
| Mercaptoacetic acid | 95 | D |
| *p*-Toluene sulphonic acid | 2.1 | |
| Calcium carbonate | 2.5 | E |

Method

The process follows Example 1 precisely until items A, B & C have been charged and reacted. (Viscosity ca. 2.2 Pa · s).

The reactants are cooled to 60°C and reactants 'D' added. The apparatus is modified to include Dean & Starke water removal equipment. The reactants are reheated to reflux (ca. 94°C) and water removal commenced. The reaction is continued until all water is removed. 18.6 g should theoretically be obtained. Practical quantities vary from 19 to 20.5 g.

The mixture is cooled to just below reflux and ingredient 'E' added. The temperature is maintained for 30 minutes after which it is cooled and filtered.

Final constants:—

Viscosity at 25°C 8.0 Pa · s
non-volatiles 55.2%
Mercaptan value 0.658 moles/kg of resin (71% theor. value)
Mercaptan equivalent 1520

Example 7
Thiol-containing acrylic resin component

| | | |
|---|---|---|
| Xylene | 542 | A |
| Pentoxone (shell chemicals) | 300 | |
| Methyl methacrylate | 684 | |
| Bisomer PPM6 (BP chemicals) | 176 | |
| Methacrylic acid | 18 | B |
| Hydroxyethyl methacrylate | 161 | |
| Octyl mercaptan | 4.2 | |
| Benzoyl peroxide | 22 | |
| Benzoyl peroxide | 6 | C |
| Butyl acetate | 50 | |
| Mercaptoacetic acid | 95 | D |

Method

The method is in principle the same as that for Example 3, except that the reflux temperature is approximately 130°C. The octyl mercaptan is added to 'B' to control the route of the reaction.

After the addition of the mercaptoacetic acid, water removal proceeds, though at a much slower rate, without the need for the *p*-toluene sulphonic acid catalyst because of the higher temperature of reaction. Magnesium oxide is not, therefore, required to remove any excess catalyst.

Final Constant:—

Viscosity @ 25°C 5.8 Pa · s
Non volatiles 55.1%
Mercaptan Value 0.621 Moles/kg resin (67% theor value)
Mercaptan equivalent 1610

Example 8
Acrylic adduct

| | | |
|---|---|---|
| Mercaptan ester* | 170 | A |
| Xylene | 180 | |
| Toluene | 60 | |
| DMP 30** | 5 | |
| Acrylic resin (Example 1) | 400 | B |
| Xylene | 100 | |

*Triester of Trimethylol propane and mercaptoacetic acid
**DMP 30, supplied by Rohm & Haas.

Method

Charge reactants A to flask fitted with a Liebig condenser, dropping funnel, thermometer and stirrer using a nitrogen purge throughout. Switch on heating and raise to reflux temperature (ca 100°C).

Commence addition of reactants B adjusting the ratio so that all of it is added evenly over a period of 3 hours.

Maintain reflux throughout the addition, allowing the temperature to rise as necessary (ca 130°C). Maintain temperature and reflux for 2 hours after the addition is complete.

Final constants:

Viscosity at 25°C 0.21 Pa·s
NV 38.4%
Epoxide content effectively nil
Mercaptan content (on NV) 2.3 mols/kg
Mercaptan equivalent (calc on NV) 435

Example 9
Thinner/activator

| | |
|---|---|
| *Epoxide crosslinker | 512 |
| Butyl acetate | 1162 |
| Cyclohexanone | 184 |
| Xylene | 828 |
| Methyl isobutyl ketone | 552 |
| Acetone | 364 |
| Toluene | 398 |

*Epoxide bearing crosslinking agent supplied commercially and reduced to 50% NV with butyl acetate.

Method

Add items in order stirring continuously and until fully homogeneous.

The product of Example 9 should be blended with the products of the following Examples as follows:—

90g Example 9 with 100g Example 11
110g Example 9 with 100g Example 12
135g Example 9 with 100g Example 10
60g Example 9 with 100g Example 13

before application. Additional solvents can be added if desired to improve flow characteristics.

Example 10
Clear lacquer (pigment free paint)

| | g. |
|---|---|
| *Acrylic resin 1 | 871 |
| *Acrylic resin 2 | 618 |
| Thiol containing polyester (Example 5) | 139 |
| Flow agent | 1.5 |
| Re-odourants | 4 |
| UV adsorbers | 24 |
| Toluene | 54 |

*Amine containing resins supplied commercially and reduced to 45% NV with toluene.

Method

Add in order shown under continuous stirring.

Run until homogeneous.

Example 11

White finishing paint

| | | |
|---|---|---|
| Titanium dioxide | 1196 | A |
| Antisettling agent | 2 | |
| *Acrylic resin I | 209 | |
| Dispersant | 12 | |
| Xylene | 377 | |
| *Acrylic resin 1 | 1438 | B |
| **Acrylic resin 2 | 1168 | |
| Thiol containing polyester (70% NV, Example 6) | 263 | |
| Re-odourant | 5 | |
| Flow agent | 4.5 | |
| Toluol | 267 | |

*Amine-containing resin provided by Kunstharsfabriek Synthese BV, Holland, adjusted to 45% NV with xylene.

**Resin provided by Cray Valley Products Ltd, UK.

Process

Premix ingredients 'A' under high speed stirrer and pass through laboratory horizontal sand grinder. Transfer to container with stirring facilities and add items in 'B' in order shown.

Final constants:

non volatiles 55.2% Pigment:Binder=0.8:1

Viscosity 62 secs BSB4 @ 25°C

Example 12

| | | |
|---|---|---|
| Carbon black | 91 | A |
| *Acrylic resin 1 | 740 | |
| Acrylic resin (Example 2) | 180 | |
| Dispersant | 1 | |
| Xylene | 246 | |
| Acrylic resin 1 | 418 | B |
| Acrylic resin 1 | 667 | C |
| Acrylic resin (Example 3) | 142 | |
| Xylene | 100 | |
| Acrylic resin 1 | 1000 | D |
| Acrylic resin containing thiol group (Example 6) | 234 | |
| Thiol containing polyester (Example 5) | 180 | |
| Flow agent | 4 | |
| Re-odourant | 4 | |
| Toluene | 400 | |

Method

Charge ingredients 'A' to ball mill and grind 48 hours. Check fineness and if satisfactory add item 'B'. Run 4 hours. Premix items 'C' and add to mill. Run 2 hours. Drop into container fitted with stirrer and items 'D' in order shown.

Example 13
Primer surfacer

| | g | |
|---|---|---|
| Carbon black pigment | 12 | A |
| Titanium dioxide pigment | 360 | A |
| Air floated silica | 160 | A |
| Micronised barytes | 480 | A |
| China clay | 400 | A |
| Micronised talc | 400 | A |
| Wetting agent | 20 | A |
| Acrylic resin 1 | 1400 | A |
| Flow agent | 1 | A |
| Methyl ethyl ketone | 290 | A |
| Toluene | 100 | A |
| Toluene | 150 | B |
| *Acrylic resin 1 | 747 | C |
| Thiol-bearing polyester (Example 4) | 128 | C |
| Antisetting agent | 48 | |

Method

Charge all ingredients 'A' to ball mill. Run 48 hours and check fineness. Transfer to container with stirring facilities. Use item 'B' to ensure complete transfer. Add items 'C' in order shown with continuous stirring.

Viscosity @ 25°C 91 secs BSB4
Pigment/Binder 1.76/l
Non-volatiles 52.1%

**Claims**

1. A three-component coating composition comprising a first component including a polymer containing epoxide groupings, a second component including one or more acrylic resins containing amino or amide groupings and, optionally, carboxylic acid groupings, and a third component including one or more polymers containing thiol groupings and, optionally, carboxylic acid groupings, selected from acrylic resins, acrylic adducts, alkyd resins, oil-free alkyd resins and polyester resins, in which the thiol groupings are those obtained by reacting a hydroxy grouping with mercaptoacetic acid, and from acrylic resins and acrylic adducts, in which the thiol groupings are those obtained by reacting an epoxy grouping with a polyfunctional mercaptan.

2. A composition according to claim 1, in which the ratio of the total number of epoxide equivalents to the total number of amine, amide, carboxylic acid and thiol equivalents when added together is (0.1 to 10):1.

3. A composition according to claim 1 or claim 2, in which the proportion of resin(s) containing thiol groups as a weight/weight percentage of all the resins containing groups which react with epoxide groups (ie amine, amide, carboxylic acid and thiol groups) is not less than 2% or more than 99.5%.

4. A composition according to any of claims 1 to 3, in which the polymer containing epoxide groupings is an essentially aliphatic compound containing not substantially less than two epoxide groupings per molecule, or an acrylic resin containing an average of not substantially less than two epoxide groupings per molecule.

5. A composition according to any of claims 1 to 4, in which the amine-containing resin has an amine content equivalent to 5 to 30 mg KOH/g.

6. A composition according to claim 5, in which said resin also has an acid value of from 10 to 50 mg KOH/g.

7. A composition according to any of claims 1 to 6, in which the thiol-containing resin contains mercaptoacetate groups.

8. A composition according to any of claims 1 to 7, in which the thiol-containing resin is a polyester containing from 0.15 to 1.5 moles SH/kg; an acrylic resin containing from 0.15 to 4.0 moles SH/kg or an acrylic adduct containing from 0.15 to 5.0 moles SH/kg.

9. A two-pack coating composition according to any of claims 1 to 8, containing the epoxide-containing resin in one pack and the amine-containing resin and the thiol-containing resin plus pigments in the other pack.

**Patentansprüche**

1. Dreikomponenten-Überzugszusammensetzung, umfassend eine erste Komponente, die ein Polymer, welches Epoxidgruppen enthält, einschliesst, eine zweite Komponente, die ein oder mehrere Acrylharze, enthaltend Amino- oder Amidgruppen, und, gewünschtenfalls, Carboxylsäuregruppen einschliesst, und eine dritte Komponente, die ein oder mehrere Polymere, enthaltend Thiolgruppen und, gewünschtenfalls, Carboxylgruppen, ausgewählt aus Acrylharzen, Acryl-Addukten, Alkydharzen, ölfreien Alkydharzen und Polyesterharzen, einschliesst, wobei die Thiolgruppen solche sind, die durch Umsetzen einer Hydroxidgruppe mit Mercaptoessigsäure erhalten wurden, und von Acrylharzen und Acryl-Addukten, bei denen die Thiolgruppen erhalten wurden durch Umsetzen einer Epoxygruppe mit einem polyfunktionellen Mercaptan.

2. Zusammensetzung gemäss Anspruch 1, in welcher das Verhältnis der Gesamtanzahl der Epoxyäquivalente zu der Gesamtanzahl von Amin, Amid, Carboxylsäure und Thioläquivalenten zusammengezählt (0,1 bis 10):1 beträgt.

3. Zusammensetzung gemäss Anspruch 1 oder 2, in welcher das Verhältnis des oder der Harze(s), enthaltend Thiolgruppen als ein Gewicht/Gewicht - Prozentsatz aller Harze, welche Gruppen enthalten, die mit Epoxidgruppen reagieren (d.h. Amin-, Amid-, Carboxylsäure- und Thiolgruppen), nicht weniger als 2% oder mehr als 99,5% beträgt.

4. Zusammensetzung gemäss einem der Ansprüche 1 bis 3, in welcher das Epoxidgruppen enthaltende Polymer eine im wesentlichen aliphatische Verbindung ist, die im wesentlichen nicht weniger als zwei Epoxidgruppen pro Molekül enthält oder ein Acrylharz, das im Durchschnitt im wesentlichen nicht weniger als zwei Epoxidgruppen pro Molekül enthält.

5. Zusammensetzung gemäss einem der Ansprüche 1 bis 4, in welcher das aminhaltige Harz ein Amingehalt - Äquivalent von 5 bis 30 mg KOH/g hat.

6. Zusammensetzung gemäss Anspruch 5, in welcher das Harz eine Säurezahl von 10 bis 50 mg KOH/g hat.

7. Zusammensetzung gemäss einem der Ansprüche 1 bis 6, in welcher das Thiol enthaltende Harz Mercaptoacetatgruppen enthält.

8. Zusammensetzung gemäss einem der Ansprüche 1 bis 7, in welcher das Thiol enthaltende Harz ein Polyester, enthaltend 0,15 bis 1,5 Mol SH/kg; ein Acrylharz, enthaltend 0,15 bis 4,0 Mol SH/kg, oder ein Acryl-Addukt, enthaltend 0,15 bis 5,0 Mol SH/kg, ist.

9. Zweipackige Überzugszusammensetzung gemäss einem der Ansprüche 1 bis 8, enthaltend das Epoxid enthaltende Harz in einer Packung und das Amin enthaltende Harz und das Thiol enthaltende Harz plus Pigment in der anderen Packung.

**Revendications**

1. Composition de revêtement à trois constituants comprenant un premier constituant renfermant un polymère contenant des groupements époxyde, un second constituant renfermant une ou plusieurs résines acryliques contenant des groupements amino ou amide et, de façon optionnelle, des groupements acide carboxylique et un troisième constituant renfermant un ou plusieurs polymères, contenant des groupements thiols et, de façon optionnelle, des groupements acide carboxylique, choisi(s) parmi les résines acryliques, les produits d'addition acryliques, les résines alkydes, les résines alkydes exemptes d'huile et les résines polyester, pour lesquelles les groupements thiols sont ceux obtenus en faisant réagir un groupement hydroxy avec l'acide mercapto-acétique, et pour des résines acryliques et des produits d'addition acryliques, les groupements thiols sont ceux obtenus en faisant réagir un groupement époxy avec un mercaptan polyfonctionnel.

2. Composition selon la revendication 1, caractérisée en ce que le rapport du nombre total d'équivalents époxyde au nombre total d'équivalents amine, amide, acide carboxylique et thiol lorsqu'ils sont ajoutés l'un à l'autre est de (0,1 à 10):1.

3. Composition selon la revendication 1 ou la revendication 2, caractérisée en ce que la proportion de résine(s) contenant des groupes thiols, en pourcentage poids/poids, par rapport à toutes les résines contenant des groupes qui réagissent avec des groupes époxyde (c'est à dire des groupes amine, amide, acide carboxylique et thiol) n'est pas inférieure à 2% ni supérieure à 99,5%.

4. Composition selon l'une des revendications 1 à 3, caractérisée en ce que le polymère contenant des groupements époxyde est un composé essentiellement aliphatique ne contenant effectivement pas moins de deux groupements époxyde par molécule, ou une résine acrylique contenant effectivement une moyenne de pas moins de deux groupements époxyde par molécule.

5. Composition selon l'une des revendications 1 à 4, caractérisée en ce que la résine contenant l'amine possède une teneur en amine équivalente à 5 à 30 mg KOH/g.

6. Composition selon la revendication 5, caractérisée en ce que ladite résine possède aussi un indice d'acidité de 10 à 50 mg KOH/g.

7. Composition selon l'une quelconque des revendications 1 à 6, caractérisée en ce que la résine contenant le thiol contient des groupes mercaptoacétate.

8. Composition selon l'une des revendications 1 à 7, caractérisée en ce que le résine contenant le thiol

est un polyester contenant de 0,15 à 1,5 moles de SH/kg, une résine acrylique contenant de 0,15 à 4,0 moles en SH/kg ou un produit d'addition acrylique contenant de 0,15 à 5,0 moles de SH/kg.

9. Composition de revêtement à deux emballages selon l'une des revendications 1 à 8, caractérisée en ce qu'elle contient la résine contenant l'époxyde dans un emballage et la résine contenant l'amine et la résine contenant le thiol plus les pigments dans l'autre emballage.